(19) Europäisches Patentamt
European Patent Office
Office européen des brevets

(11) **EP 2 957 929 A1**

(12) **EUROPEAN PATENT APPLICATION**
published in accordance with Art. 153(4) EPC

(43) Date of publication:
**23.12.2015 Bulletin 2015/52**

(51) Int Cl.:
*G01T 1/205* (2006.01)          *G01T 1/17* (2006.01)
*G01T 1/20* (2006.01)

(21) Application number: **14750989.7**

(22) Date of filing: **12.02.2014**

(86) International application number:
**PCT/JP2014/000720**

(87) International publication number:
**WO 2014/125814 (21.08.2014 Gazette 2014/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.02.2013 JP 2013029059**

(71) Applicant: **Kabushiki Kaisha Toshiba, Inc.**
**Tokyo 105-8001 (JP)**

(72) Inventors:
• KUME, Naoto
  **Tokyo 105-8001 (JP)**

• **KURODA, Hidehiko**
  **Tokyo 105-8001 (JP)**
• **NAKAYAMA, Kunihiko**
  **Tokyo 105-8001 (JP)**
• **TAKAKURA, Kei**
  **Tokyo 105-8001 (JP)**

(74) Representative: **Moreland, David et al**
**Marks & Clerk LLP**
**Aurora**
**120 Bothwell Street**
**Glasgow G2 7JS (GB)**

(54) **ALPHA RAY OBSERVATION DEVICE, ALPHA RAY OBSERVATION SYSTEM, AND ALPHA RAY OBSERVATION METHOD**

(57)     An alpha ray observation apparatus (200), according to an embodiment, that observes alpha rays by detecting alpha-ray-caused light generated from an alpha ray source in a to-be-observed object, has: an alpha-ray-caused light wavelength selecting unit (1a) that can select light including wavelength of the alpha-ray-caused light; an alpha-ray-caused light detecting unit (2a) that measures an amount of alpha-ray-caused light; a short-side wavelength selecting unit (1b) that can select light of a short-side wavelength that is shorter than the wavelength of the alpha-ray-caused light; a short-side wavelength light detecting unit (2b); a long-side wavelength selecting unit (1c) that can select light of a long-side wavelength that longer than the wavelength of the alpha-ray-caused light; a long-side wavelength light detecting unit (2c); and a correction unit (4) that calculates a corrected light amount by correcting the amount of the alpha-ray-caused light.

FIG. 1

EP 2 957 929 A1

**Description**

TECHNICAL FIELD

Embodiments of the present invention relate to an alpha ray observation apparatus, an alpha ray observation system, and an alpha ray observation method.

BACKGROUND ART

As a detector that detects alpha rays, one of radiation, a detector that uses a ZnS scintillator, for example, is known, which emits light at a time when alpha rays enter. On the other hand, there is an alpha ray observation apparatus that is able to observe the existence of alpha rays even from a remote place by making use of the characteristics of alpha rays that cause nitrogen in the atmosphere to emit light and observing the light emitted from nitrogen in order to detect alpha rays.

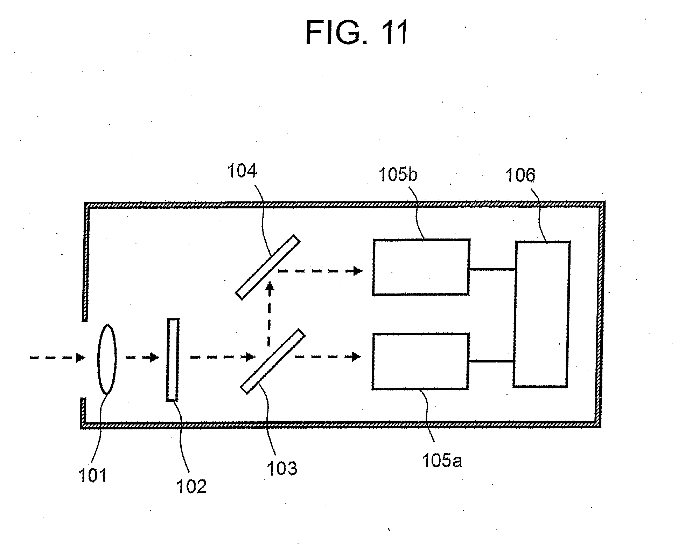

FIG. 11 is a cross-sectional view showing a conventional example of an alpha ray observation apparatus.

This apparatus monitors alpha rays by measuring the light emitted from nitrogen. This apparatus includes a collecting lens 101, which collects the light emitted from nitrogen; a wavelength selection element 102, which extracts, from the collected light, the light emitted from nitrogen; an optical element 103, which separates the extracted nitrogen-originated light into transmitted light and reflected light; a direction changing unit 104, which changes the propagation direction of the reflected light; light detectors 105a and 105b, which respectively receive the transmitted light and the reflected light to count the number of photons; and a signal processing apparatus 106. The signal processing apparatus 106 detects the nitrogen-originated light associated with alpha rays as the light detector 105a measure the transmitted light and the light detector 105b measure the reflected light simultaneously.

Another known technique is for filling a measurement environment with nitrogen in order to measure the distribution of light generated in this measurement environment as an image.

In the example shown in FIG. 11, as for nitrogen-originated beams that have been separated into two after being selectively extracted by the wavelength selection element 102, the number of photons is counted by the light detectors 105a and 105b. Moreover, in the light detectors 105a and 105b, noise signals caused by the temperature of the atmosphere or radiation are detected as well.

Photons resulting from the emission of light from nitrogen are simultaneously observed by the light detectors 105a and 105b. However, the noise signals are detected by the light detectors 105a and 105b independently in terms of time. Accordingly, the signal processing apparatus 106 can detect, out of the noise signals, signals associated with the emission of light from nitrogen by extracting the signals that are simultaneously measured by the light detectors 105a and 105b. As a result, it is possible to selectively observe the emission of light from nitrogen and thereby detect alpha rays.

PRIOR ART DOCUMENTS

PATENT DOCUMENTS

Patent Document 1: Jpn. Pat. Appln. Laid-Open Publication No. 2000-507698.

NON-PATENT DOCUMENTS

Non-Patent Document 1: Remote Optical Detection of Alpha Radiation, IAEA-CN-184/23.

SUMMARY OF THE INVENTION

PROBLEMS TO BE SOLVED BY THE INVENTION

In the conventional example, the wavelength that matches the emission of light from nitrogen is identified. However, if the background, which consists of sunlight, artificial light, or the like that exists in this wavelength region, is going to change, the amount of light emission resulting from alpha rays may not be accurately measured. Therefore, the problem is that its use is limited to measurement in a dark room with no background.

Embodiments of the present invention have been made to solve the above problems. The object of the embodiments is to enable measurement of the amount of alpha rays even in the measurement environment with background light.

MEANS FOR SOLVING THE PROBLEM

According to an embodiment, there is provided an alpha ray observation apparatus that observes alpha rays by detecting alpha-ray-caused light which is generated from interaction between an atmosphere substance and alpha rays generated from an alpha ray source in a to-be-observed object, the apparatus comprising: an alpha-ray-caused light wavelength selecting unit that can select light of a predetermined wavelength width including wavelength of the alpha-ray-caused light; an alpha-ray-caused light detecting unit to measure an amount XA of alpha-ray-caused light coming from the alpha-ray-caused light wavelength selecting unit; a short-side wavelength selecting unit that can select light of a short-side wavelength that is close to the wavelength of the alpha-ray-caused light and is shorter than the wavelength of the alpha-ray-caused light; a short-side wavelength light detecting unit to measure an amount BS of short-side wavelength light coming from the short-side wavelength selecting unit; a long-side wavelength selecting unit that can select light of a long-side wavelength that is close to the wavelength of the alpha-ray-caused light and is longer than the wavelength of the alpha-ray-caused light; a long-side wavelength light detecting unit to measure an amount BL of long-side wavelength light coming from the long-side wavelength selecting unit; and a correction unit to calculate a corrected light amount XAT by correcting the amount XA of the alpha-ray-caused light based on the amount XA of the alpha-ray-caused light, the amount BS of the short-side wavelength light, and the amount BL of the long-side wavelength light.

According to another embodiment, there is provided an alpha ray observation method for observing alpha rays by detecting alpha-ray-caused light which is generated from interaction between an atmosphere substance and alpha rays generated from an alpha ray source in a to-be-observed object, the method comprising: an alpha-ray-caused light measurement step, by an alpha ray observation apparatus, of measuring an amount of alpha-ray-caused light, an amount of short-side wavelength light that is shorter than wavelength of the alpha-ray-caused light, and an amount of long-side wavelength light that is longer than the wavelength of the alpha-ray-caused light; a correction step of calculating, after the alpha-ray-caused light measurement step, a corrected light amount by correcting the amount of the alpha-ray-caused light based on the amount of the alpha-ray-caused light, the amount of the short-side wavelength light, and the amount of the long-side wavelength light; and an alpha ray intensity calculation step of calculating intensity of the alpha ray based on the corrected amount of the alpha-ray-caused light.

ADVANTAGE OF THE INVENTION

According to embodiments of the present invention, it is possible to measure the amount of alpha rays even in the measurement environment with background light.

BRIEF DESCRIPTION OF THE DRAWINGS

FIG. 1 is a longitudinal cross-sectional view showing the configuration of an alpha ray observation apparatus according to a first embodiment of the present invention.
FIG. 2 is a graph for explaining the principle of measuring the amount of alpha-ray-caused light in the alpha ray observation apparatus according to the first embodiment of the present invention.
FIG. 3 is a flowchart showing a procedure of an alpha ray observation method according to the first embodiment of the present invention.
FIG. 4 is a longitudinal cross-sectional view showing the configuration of a modified example of an alpha ray observation apparatus according to the first embodiment of the present invention.
FIG. 5 is a vertical cross-sectional view showing the configuration of an alpha ray observation apparatus according to a second embodiment of the present invention. This diagram shows the vertical-direction cross section.
FIG. 6 is a longitudinal cross-sectional view showing the configuration of an alpha ray observation apparatus according to a third embodiment of the present invention.
FIG. 7 is a flowchart showing a procedure of an alpha ray observation method according to the third embodiment of the present invention.
FIG. 8 is a longitudinal cross-sectional view showing the configuration of an alpha ray observation system according to a fourth embodiment of the present invention.
FIG. 9 is a longitudinal cross-sectional view showing the configuration of a modified example of an alpha ray observation system according to a fourth embodiment of the present invention.
FIG. 10 is a longitudinal cross-sectional view showing the configuration of an alpha ray observation apparatus according to a fifth embodiment of the present invention.
FIG. 11 is a cross-sectional view showing a conventional example of an alpha ray observation apparatus.

EMBODIMENTS FOR CARRYING OUT THE INVENTION

Hereinafter, with reference to the accompanying drawings, embodiments of an alpha ray observation apparatus, an alpha ray observation system, and an alpha ray observation method of the present invention will be described. The same or similar portions are represented by the same reference symbols, and a duplicate description will be omitted.

[FIRST EMBODIMENT]

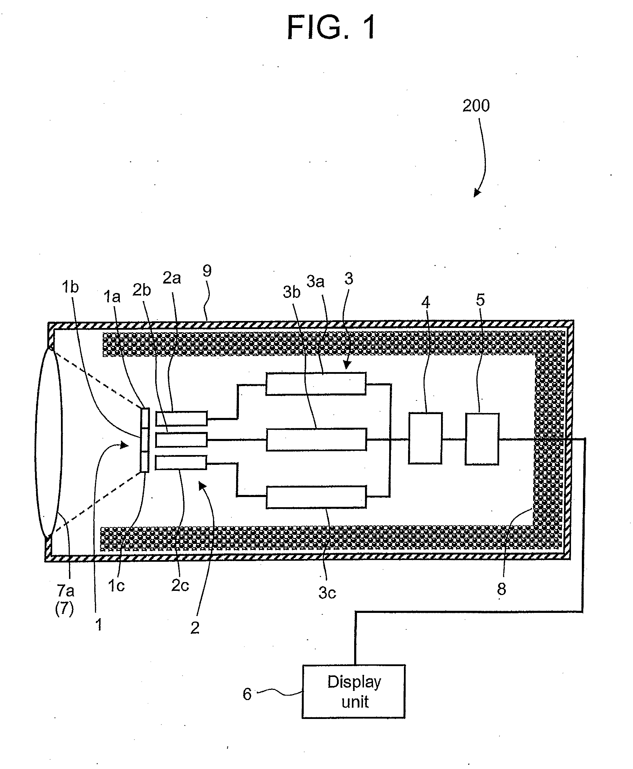

FIG. 1 is a longitudinal cross-sectional view showing the configuration of an alpha ray observation apparatus according to a first embodiment of the present invention.

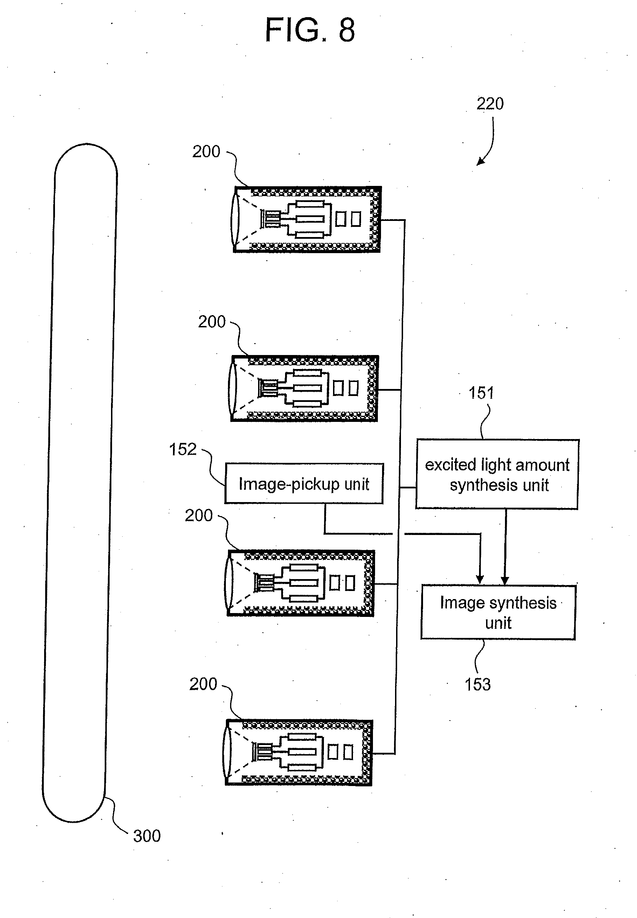

An alpha ray observation apparatus 200 is used to measure alpha rays inside a to-be-observed object 300 (Refer to FIG. 8). The alpha ray observation apparatus 200 optically measures the light caused by alpha rays (alpha-ray-caused light), which is emitted from interaction between alpha rays and surrounding molecules.

The alpha ray observation apparatus 200 includes a collecting unit 7, an alpha-ray-caused light wavelength selecting unit 1a, a short-side wavelength selecting unit 1b, a long-side wavelength selecting unit 1c, an alpha-ray-caused light detecting unit 2a, a short-side wavelength light detecting unit 2b, a long-side wavelength light detecting unit 2c, counters 3a, 3b, and 3c, a light amount calculation unit 4, and an alpha ray identifying unit 5.

Hereinafter, the alpha-ray-caused light wavelength selecting unit 1a, the short-side wavelength selecting unit 1b, and the long-side wavelength selecting unit 1c will be collectively referred to as a wavelength selecting unit 1.

The alpha-ray-caused light detecting unit 2a, the short-side wavelength light detecting unit 2b, and the long-side wavelength light detecting unit 2c are encircled by a shielding member 8, which shields these components against radiation such as gamma rays. The above-described components, including the shielding member 8, are housed inside a housing 9. FIG. 1 shows the case where the light amount calculation unit 4 and the alpha ray identifying unit 5 are housed inside the housing 9. However, the light amount calculation unit 4 and the alpha ray identifying unit 5 are not necessarily required to be housed in the housing 9. The light amount calculation unit 4 and the alpha ray identifying unit 5 may be placed outside the housing 9.

Hereinafter, the alpha-ray-caused light detecting unit 2a, the short-side wavelength light detecting unit 2b, and the long-side wavelength light detecting unit 2c will be collectively referred to as a photon detector set 2.

The counters 3a, 3b, and 3c will be collectively referred to as a counter 3.

The alpha ray observation apparatus 200 further includes the collecting unit 7 and a display unit 6, which displays results of observation.

The collecting unit 7 collects light coming from a to-be-observed object. The collecting unit 7 includes a convex lens 7a as shown in FIG. 1, for example. The convex lens 7a is made of material that allows the wavelength of the alpha-ray-caused light to pass therethrough.

As described above, the wavelength selecting unit 1 includes the alpha-ray-caused light wavelength selecting unit 1a, the short-side wavelength selecting unit 1b, and the long-side wavelength selecting unit 1c. The alpha-ray-caused light wavelength selecting unit 1a selects light of a predetermined wavelength width, including the wavelength of the alpha-ray-caused light.

The short-side wavelength selecting unit 1b selects a short-side wavelength light that is close to the wavelength of the alpha-ray-caused light but shorter than the wavelength of the alpha-ray-caused light. The long-side wavelength selecting unit 1c selects a long-side wavelength light that is close to the wavelength of the alpha-ray-caused light but longer than the wavelength of the alpha-ray-caused light. Those units may be optical filters, for example.

The wavelength selecting unit 1 is not limited to the optical filters. For example, the wavelength selecting unit 1 may be a prism or the like. If prisms are used in the wavelength selecting unit 1, the alpha-ray-caused light wavelength selecting unit 1a, the short-side wavelength selecting unit 1b, and the long-side wavelength selecting unit 1c are disposed in such a way as to correspond to the position of wavelength of each of the separated beams.

In this case, the wavelength that is selected by the alpha-ray-caused light wavelength selecting unit 1a is the wavelength caused by alpha rays. For example, in the case of light caused by interaction between nitrogen and alpha rays, the wavelength may be: 312 nm, 314 nm, 316 nm, 337 nm, 354 nm, 358 nm, 376 nm, 380 nm, 391 nm, or the like. The light is near-ultraviolet light whose wavelength is close to that of visible light.

Among them, for example, ultraviolet light with a wavelength of 314 nm, 316 nm, 337 nm, or 358 nm is a typical one.

Suppose that the alpha-ray-caused light wavelength selecting unit 1a selects the wavelength of 337 nm, for example. In this case, as for the adjacent wavelengths, the short-side wavelength is 316 nm, and the long-side wavelength is 354 nm. Accordingly, the wavelengths therebetween may be picked up: the short-side wavelength selecting unit 1b is made as to be able to select 326 nm, and the long-side wavelength selecting unit 1c is made able to select 346 nm, for example. For example, as for the selection of wavelength, the short-side wavelength selecting unit 1b and the long-side wavelength selecting unit 1c may select at resolution of about 2 nm.

The alpha-ray-caused light detecting unit 2a detects the light of the wavelength selected by the alpha-ray-caused light wavelength selecting unit 1a. The short-side wavelength light detecting unit 2b detects the light of the wavelength selected by the short-side wavelength selecting unit 1b. The long-side wavelength light detecting unit 2c detects the light of the wavelength selected by the long-side wavelength selecting unit 1c.

Those light detectors may be light detectors capable of detecting at photon levels, such as photomultiplier tubes (PMT: Photomultiplier Tube), photodiodes, MPPC (Multi-Pixel Photon Counter), or cooled CCD (Charge-Coupled Apparatus) cameras, and the like.

The counter 3a counts detection signals supplied from the alpha-ray-caused light detecting unit 2a to output the count value. The counter 3b counts detection signals supplied from the short-side wavelength light detecting unit 2b to output the count value. The counter 3c counts detection signals supplied from the long-side wavelength light detecting unit 2c to output the count value. The counters are so configured as to amplify pulse signals generated from each light detector or adjust the shape of the pulse signals when necessary, and are able to count the number of pulse signals.

The light amount calculation unit 4 calculates the amount of alpha-ray-caused light based on the count values supplied from the counters 3a, 3b, and 3c. As described later, the light amount calculation unit 4 is a correcting unit that calculates the amount of alpha-ray-caused light by making corrections corresponding to the background.

The alpha ray identifying unit 5 calculates the intensity of alpha rays in the to-be-observed object 300 (Refer to FIG. 8) based on the amount of alpha-ray-caused light calculated by the light amount calculation unit 4. The amount of alpha-ray-caused light is proportional to the intensity of alpha rays.

A conversion factor that is used to convert the amount of alpha-ray-caused light into the intensity of alpha rays is dependent on the counting efficiency of the alpha ray observation apparatus 200 itself, the distance between the to-be-observed object 300 (Refer to FIG. 8) and the alpha ray observation apparatus 200, and the like. The counting efficiency of the alpha ray observation apparatus 200 itself is determined based on the area of an opening of the alpha ray observation apparatus 200 that takes in light, and the arrangement of components of the alpha ray observation apparatus 200 inside the housing 9.

Accordingly, the conversion factor that should be used in the alpha ray identifying unit 5 can be set by making evaluation through calculation or carrying out calibration in a predetermined system in advance or performing any other process.

The display unit 6 may be a liquid crystal monitor that is mounted on the apparatus, or a display of a PC or the like. The shielding member 8 is made of high-density material, such as tungsten or lead. The thickness and size of the shielding member 8 is determined based on the type or usage environment of the alpha-ray-caused light detecting unit 2a, short-side wavelength light detecting unit 2b, and long-side wavelength light detecting unit 2c.

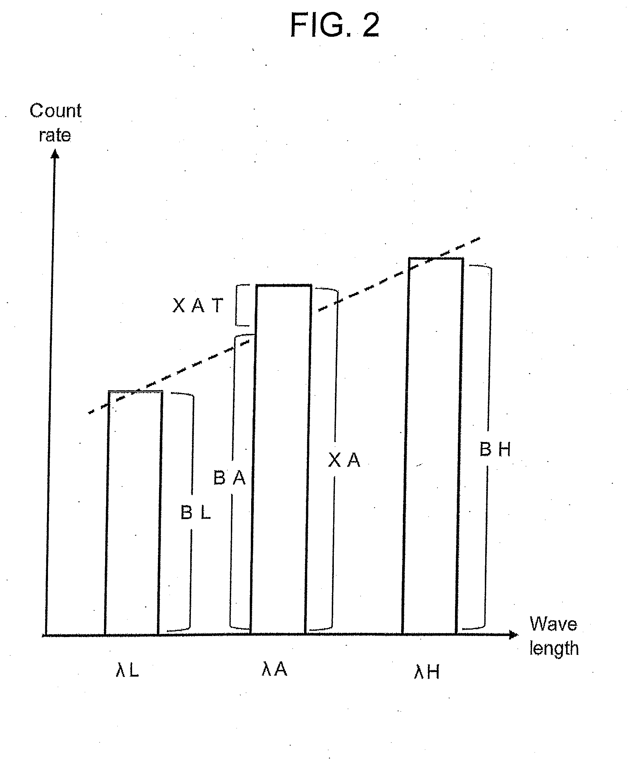

FIG. 2 is a graph for explaining the principle of measuring the amount of alpha-ray-caused light in the alpha ray observation apparatus according to the first embodiment of the present invention. The horizontal axis represents the wavelength of light, and the vertical axis represents a count rate at wavelength of each to-be-measured object.

On the horizontal axis, $\lambda A$ is the wavelength of alpha-ray-caused light, and the count rate at wavelength $\lambda A$ is XA; $\lambda L$ is the wavelength of a short-side wavelength light, and the count rate at wavelength $\lambda L$ is BL; $\lambda H$ is the wavelength of a long-side wavelength light, and the count rate at wavelength $\lambda H$ is BH.

After alpha rays are released, nitrogen in the atmosphere gets excited, emitting light of the ultraviolet region even if the light is weak. The alpha-ray-caused light then diffuses isotropically from near the surface of contaminated material. Meanwhile, in the environment, there is noise light when the alpha-ray-caused light is measured, including not only light-emission photons of nitrogen but also sunlight and light from various illuminations.

In particular, in the normal environment, most of sunlight or light from various illuminations are not the light directly coming from light sources but the light that is reflected off the to-be-observed object 300 (Refer to FIG. 8). Therefore, depending on the reflectance of the to-be-measured object, the amount of noise light entering the detectors would increase or decrease.

In this manner, observation light that consists of the alpha-ray-caused light and the noise light enters the alpha ray observation apparatus 200. In order to efficiently detect the alpha-ray-caused light, the light is collected by the collecting unit 7 in such a way that the focal point comes to the position of the photon detector set 2. The light contains many components, besides the alpha-ray-caused light that is to be measured. Therefore, the wavelength selecting unit 1 selects the wavelength, and the light enters the alpha-ray-caused light detecting unit 2a, the short-side wavelength light detecting unit 2b, and the long-side wavelength light detecting unit 2c.

For example, suppose that the alpha-ray-caused light wavelength selecting unit 1a selects 337 nm as $\lambda A$; that the short-side wavelength selecting unit 1b selects 326 nm as $\lambda L$; and that the long-side wavelength selecting unit 1c selects 346 nm as $\lambda H$.

The selected light of $\lambda A$ contains noise light and alpha-ray-caused light. The light of $\lambda L$ and $\lambda H$ only contains noise light.

The information obtained by the counter 3a is about alpha-ray-caused light XAT + background BA from the alpha-ray-caused light detecting unit 2a. The information obtained by the counter 3b is about background BL from the short-side wavelength light detecting unit 2b. The information obtained by the counter 3c is about background BH from the long-side wavelength light detecting unit 2c.

For example, metal such as stainless steel or copper does not absorb light that is close to a range of 315 nm to 357 nm in wavelength, which is the light-emission wavelength of nitrogen, and reflects most of the light. Therefore, noise light of wavelength BL and BH in this region would increase or decrease at almost the same rate. Accordingly, the light amount calculation unit 4 can calculate the amount of BA by recognizing the amounts of noise light BL and BH.

As a specific calculation method, as shown in FIG. 2, based on the count values for each of wavelengths $\lambda L$ and $\lambda H$, BA can be evaluated by the linear function shown in formula (1).

$$BA = (BH - BL)(\lambda A - \lambda L)/(\lambda H - \lambda L) + BL \qquad (1)$$

The value that is calculated by subtracting BA from a signal measured by the alpha-ray-caused light detecting unit 2a is the amount of light associated with the alpha-ray-caused light. If the amount of light resulting from alpha rays has a statistically significant difference, that value is displayed on the display unit 6. The displaying will allow a user to visually recognize whether or not alpha rays exist.

The background has been assumed to be light. However, in the environment in which alpha rays exist, other kinds of radiation such as gamma rays or beta rays exist in many cases. These kinds of radiation in the environment enter the alpha ray observation apparatus 200 randomly.

Even though the effects of radiation can be reduced in the evaluation of the light amount calculation unit 4, the sensitivity to gamma rays or beta rays may be high depending on the type of photon detectors. The use of the shielding member 8 can further reduce the effects of radiation.

Radiation might cause detectors, circuits, and the like to deteriorate. The use of the shielding member 8 also can slow the pace of deterioration.

According to the present embodiment, there are three photon detectors, i.e., the alpha-ray-caused light detecting unit 2a, the short-side wavelength light detecting unit 2b, and the long-side wavelength light detecting unit 2c. However, the number of photon detectors is not limited to three. There may be three or more photon detectors. As the wavelength to be selected, the wavelength of alpha-ray-caused light may be selected in addition to those described above, thereby leading to an increase in the amount of signals.

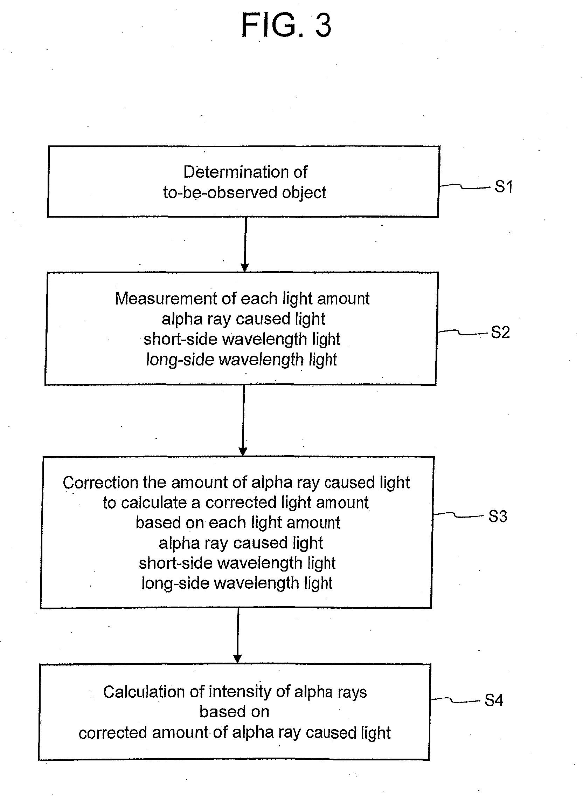

FIG. 3 is a flowchart showing a procedure of an alpha ray observation method according to the first embodiment of the present invention.

First, a to-be-observed object (Refer to FIG. 8) from which alpha rays are to be observed is determined (Step S1).

After step S1, the alpha ray observation apparatus 200 measures the amount of alpha-ray-caused light, the amount of a short-side wavelength light whose wavelength is shorter than that of the alpha-ray-caused light, and the amount of a long-side wavelength light whose wavelength is longer than that of the alpha-ray-caused light (Step S2).

After step S2, based on the amount of the alpha-ray-caused light, the amount of the short-side wavelength light, and the amount of the long-side wavelength light, the amount of the alpha-ray-caused light is corrected to calculate a corrected light amount (Step S3).

After step S3, based on the corrected amount of the alpha-ray-caused light, the intensity of alpha rays is calculated (Step S4).

According to the above-described configuration of the present embodiment, the amount of noise light to the alpha-ray-caused light detecting unit 2a is calculated based on the amounts of noise light to the short-side wavelength light detecting unit 2b and the long-side wavelength light detecting unit 2c. Therefore, even if the amounts of noise light vary, the amount of the alpha-ray-caused light can be evaluated.

Accordingly, the effects of noise light can be reduced as well. Thus, the alpha ray observation apparatus 200 can be used even under sunlight or lighting equipment that slightly contains the ultraviolet region, such as fluorescent lights.

Moreover, according to the method of the present embodiment, it is possible to reduce not only the light but also a change in the count rate associated with a change in the radiation of the environment. Therefore, the alpha ray observation apparatus 200 can be applied to various locations.

1 By increasing the number of detecting units that make up the photon detector set 2, it is possible to select more wavelengths. Accordingly, it is possible to detect the light of nitrogen or the like, which emits light at a plurality of wavelengths, without any waste. Furthermore, the shielding member 8 provided can further curb influence caused by the environment, and improve the radiation resistance of the apparatus.

As described above, even in the measurement environment in which the background changes, it is possible to accurately measure the amount of alpha rays.

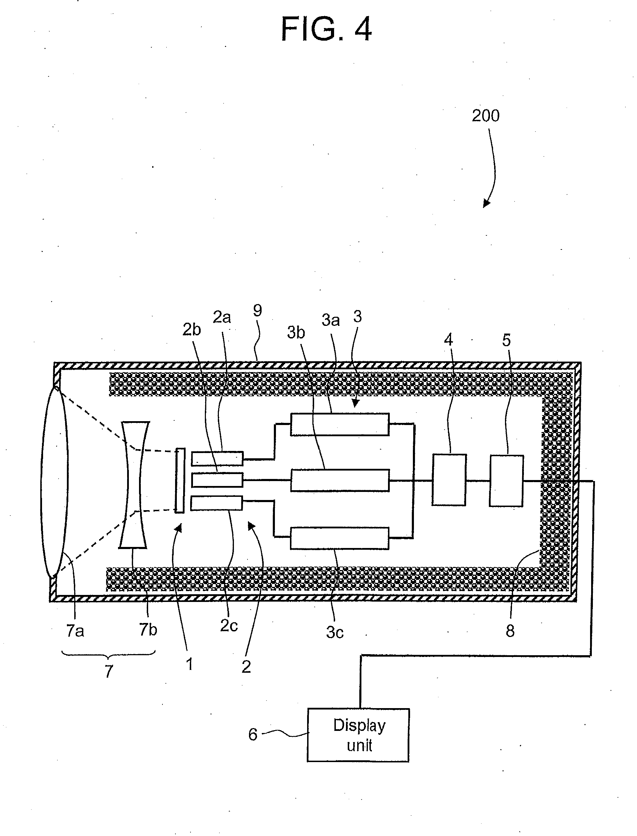

FIG. 4 is a longitudinal cross-sectional view showing the configuration of a modified example of an alpha ray observation apparatus according to the first embodiment of the present invention.

In the case of the first embodiment, the collecting unit 7 only includes the convex lens 7a as shown in FIG. 1. However, the configuration is not limited to this. The collecting unit 7 may include a combination of a convex lens 7a and a concave lens 7b as shown in FIG. 4; and may convert the light to parallel light. Moreover, through a commercially available small-diameter mount, the lens may be used.

[SECOND EMBODIMENT]

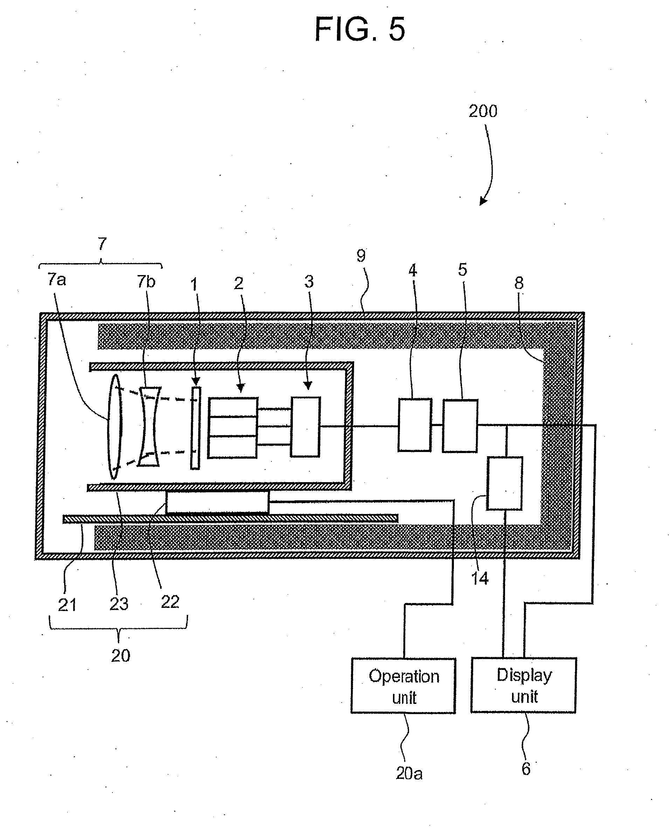

FIG. 5 is a vertical cross-sectional view showing the configuration of an alpha ray observation apparatus according to a second embodiment of the present invention. This diagram shows the vertical-direction cross section. The direction toward the upper side of FIG. 5 is vertically upward.

The present embodiment is a variant of the first embodiment, including a movement mechanism unit 20, an operation unit 20a, and an ambient light identifying unit 14.

The movement mechanism unit 20 includes a traveling pedestal 21, a traveling unit 22, and a moving housing 23. The traveling pedestal 21 is a flat plate that is horizontally provided in the housing 9 and that is supported by the housing 9. The traveling pedestal 21 extends in an axis direction of the housing 9.

The traveling unit 22 carries the moving housing 23, and moves on the traveling pedestal 21 in the axis direction of the housing 9. In accordance with an instruction signal from the operation unit 20a, the traveling unit 22 travels a predetermined distance back and forth in the axis direction of the housing 9. The operation unit 20a outputs a movement instruction to the traveling unit 22 in such a way that the travelling unit 22 moves away from or closer to the to-be-observed object 300 (See FIG. 8).

The moving housing 23 that is mounted on the traveling unit 22 houses the collecting unit 7, the wavelength selecting unit 1, the alpha-ray-caused light detecting unit 2a, the short-side wavelength light detecting unit 2b, and the long-side wavelength light detecting unit 2c, and the counters 3a, 3b, and 3c (FIG. 1) . The moving housing 23 is moved back and forth by the traveling unit 22 in the axis direction of the housing 9.

Accordingly, cables connected between the counters 3a, 3b, and 3c and the light amount calculation unit 4 are arranged long enough to cover the width that the traveling unit 22 travels. The cables are laid out on the assumption that the traveling unit 22 and the moving housing 23 would move.

The counters 3a, 3b, and 3c may be fixed in the housing 9 in such a way as not to move. In this case, by taking into account the width that the moving housing 23 travels, the cables provided from the alpha-ray-caused light detecting unit 2a, short-side wavelength light detecting unit 2b, and long-side wavelength light detecting unit 2c, to the counters 3a, 3b, and 3c can be set in the same way as the above arrangement.

The ambient light identifying unit 14 evaluates the degree of effects of ambient light based on an increase or decrease in the signal of the light amount calculation unit 4 at a time when the distance from the to-be-observed object 300 (See FIG. 8) is increased or decreased by the movement mechanism unit 20.

The alpha-ray-caused light, which is generated by alpha rays from an alpha ray source, is attenuated by distance before reaching the alpha ray observation apparatus 200. In the case of a point source, attenuation is inversely proportional to the square of the distance. In the case of an infinite surface source, attenuation associated with the distance does not occur.

If alpha ray sources locally exist and noise light is generated as a whole, a change in the signal of the alpha-ray-caused light detecting unit 2a becomes greater when the photon detector set 2 is moved by the movement mechanism unit 20 to a to-be-inspected object.

For example, in the case where a to-be-observed object one meter ahead is to be viewed, if the position of the alpha-ray-caused light detecting unit 2a is moved 0.1 m toward the to-be-observed object, the alpha-ray-caused light increases about 1.2 times or the square of (1 + 0.1) when contamination occurs locally or when the source can be regarded as a point source. Meanwhile, noise light is generated in such a way as to be dispersed in a surface-like manner; an increase in the amount is therefore small. As a result, an increase in the amount of signal caused by the movement is estimated to come from alpha rays.

According to the present embodiment described above, based on a change in the amount of light caused by the movement of the photon detector set 2, it is possible to distinguish the alpha-ray-caused light from ambient light. Even when the ambient light is strong in intensity, the signal of the alpha-ray-caused light can be detected.

In that manner, the effects of noise light are expected to decrease. Therefore, even in the measurement environment with large background, the amount of alpha rays can be accurately measured.

[THIRD EMBODIMENT]

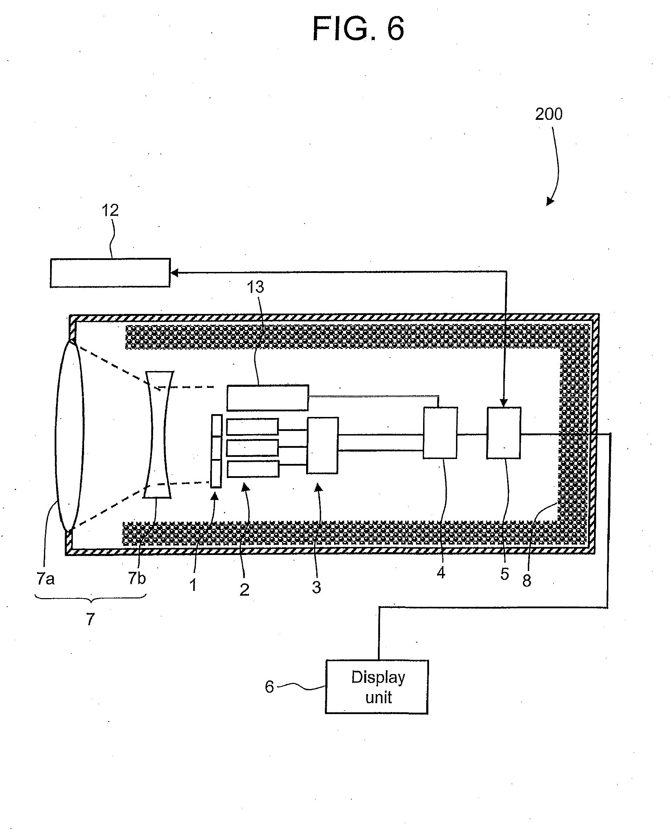

FIG. 6 is a longitudinal cross-sectional view showing the configuration of an alpha ray observation apparatus according to a third embodiment of the present invention. The present embodiment is a variant of the first embodiment, including a gas blowing unit 12 and a spectroscopic unit 13.

The gas blowing unit 12 blows gas, such nitrogen or argon, which is induced by radiation to emit ultraviolet rays. One possible way to blow the gas is to make use of a difference in pressure to blow the gas stored in a cylinder.

The spectroscopic unit 13 creates monochromatic light of each wavelength from incident light. The spectroscopic unit 13 may be an output diffraction grating, a prism, or the like, for example. The output intensity thereof can be measured by CCD or semiconductor elements.

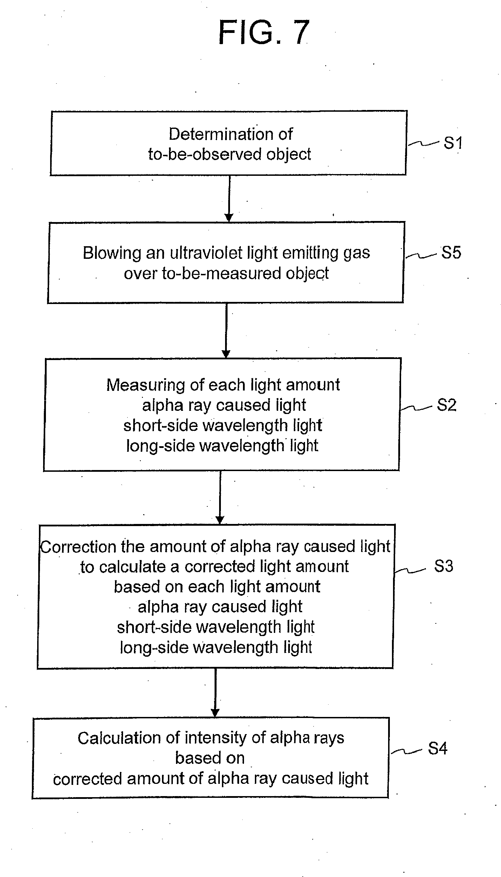

FIG. 7 is a flowchart showing a procedure of an alpha ray observation method according to the third embodiment of the present invention.

To the flow shown in FIG. 3 of the first embodiment, a step (step S5) has been added in order to blow an ultraviolet light emitting gas over a to-be-measured object; step S5 comes before step S2. By blowing the ultraviolet light emitting gas over the to-be-measured object, the percentage of the ultraviolet light emitting gas is increased, with a reduction in the oxygen concentration. Then, at step S2, the amount of light is measured.

Alpha rays generated from an alpha ray source react with nitrogen in the air and emit light. Part of the generated light goes out (quenching) after reacting with oxygen in the air. Therefore, only part of the amount of generated light can reach the alpha ray observation apparatus 200 in principle. The percentage of quenching can be calculated by Stern-Volmer equation, shown in formula (2), or the like.

$$I = I_0 /(1 + K \cdot c) \qquad (2)$$

(I: Light after quenching, $I_0$: Light before quenching, K: Constant, c: Ratio of gas that causes quenching)

In the case of oxygen in the air, the concentration thereof is about 0.2, and K is 20. Therefore, quenching occurs to about a 1/5 level.

By blowing nitrogen or the like, the percentage of oxygen, which is the cause of quenching, can be reduced in order to curb the quenching. As a result, the amount of signal to be measured would increase. For example, if the percentage of oxygen is reduced to 0.15, the amount of signal grows about 1.25 times compared with the case where the percentage of oxygen is 0.2. If the percentage of oxygen is reduced to 0.1, the amount of signal grows about 1.7 times compared with the case where the percentage of oxygen is 0.2.

The light that contains the alpha-ray-caused light whose amount has been increased by the blowing of the gas blowing unit 12 is detected by the alpha-ray-caused light detecting unit 2a after the wavelength is selected by the wavelength selecting unit 1.

The alpha-ray-caused light detecting unit 2a, the short-side wavelength light detecting unit 2b, and the long-side wavelength light detecting unit 2c measure different wavelengths. This means that a simple wavelength analysis is being carried out. However, only discrete wavelengths are measured. Therefore, the effects of wavelengths other than the selected wavelength cannot be evaluated.

The spectroscopic unit 13 that can conduct continuous wavelength analysis is provided. Therefore, the distribution of noise light can be more accurately confirmed. Thus, it is possible to further reduce the effects of noise light in the wavelength region generated by alpha rays.

According to the above-described configuration of the present embodiment, the use of the gas blowing unit 12 makes it possible to reduce quenching after the emission of light by alpha rays. Therefore, the signal associated with alpha rays can be increased.

In addition to the discrete wavelength analysis by the wavelength selecting unit 1 and the photon detector set 2, the intensity distribution of continuous wavelength of light is evaluated by the spectroscopic unit 13. As a result, it is possible to further reduce the effects of noise light in the wavelength region of light associated with alpha rays.

In that manner, the signal is expected to increase, and the effects of noise light are expected to decrease. Therefore, even in the measurement environment in which the background would change, the amount of alpha rays can be accurately measured.

[FOURTH EMBODIMENT]

FIG. 8 is a longitudinal cross-sectional view showing the configuration of an alpha ray observation system according to a fourth embodiment of the present invention.

The alpha ray observation system 220 includes a plurality of alpha ray observation apparatus 200, an excited light amount synthesis unit 151, an image-pickup unit 152, and an image synthesis unit 153. As the alpha ray observation apparatus 200, the alpha ray observation apparatus 200 of one of the first to third embodiments are used.

A plurality of the alpha ray observation apparatuses 200 are disposed in such a way as to face the spatial distribution of the to-be-observed object 300 and to be arranged in parallel each other. A plurality of the alpha ray observation apparatuses 200 are disposed in such a way that the directions of parallel light received via the collecting units 7 of the alpha ray observation apparatuses 200 become parallel to each other. That is, a plurality of the alpha ray observation apparatuses 200 are disposed in such a way that the optical axes of the collecting units 7 of the alpha ray observation apparatuses 200 become parallel to each other.

The excited light amount synthesis unit 151 receives, as inputs, the intensity of alpha rays that is output from each alpha ray observation apparatus 200, to calculate the spatial distribution of alpha-ray intensity. The excited light amount synthesis unit 151 receives, as input, an alpha ray intensity signal that is an output signal from each alpha ray observation apparatus 200 to output the spatial distribution of excited light amount based on each alpha ray intensity signal.

Instead of the alpha ray intensity signal that is output from the alpha ray identifying unit 5 of the alpha ray observation apparatus 200, a corrected light amount signal that is output from the light amount calculation unit 4 of the alpha ray observation apparatus 200 may be input to the excited light amount synthesis unit 151.

The alpha ray intensity signal is proportional to the corrected light amount signal. If the conversion factors that are used in the alpha ray identifying units 5 of the alpha ray observation apparatus 200 to convert the light amount signal to the alpha ray intensity are equal, the excited light amount synthesis unit 151 can simply superimpose the light amount signals supplied from the alpha ray observation apparatus 200.

If the alpha ray intensity is input from each alpha ray observation apparatus 200, the excited light amount synthesis unit 151 can simply superimpose the alpha ray intensities.

If the conversion factors that are used in the alpha ray identifying units 5 of the alpha ray observation apparatus 200 to convert the light amount signal to the alpha ray intensity are equal each other, the excited light amount synthesis unit 151 can superimpose the light amount signals supplied from the alpha ray observation apparatus 200 after multiplying the light amount signals by the conversion factors.

The image-pickup unit 152 takes an image of a visible light region of the to-be-observed object 300. The shooting range of the image-pickup unit 152 covers at least regions to be observed by the alpha ray observation apparatus 200. The image-pickup unit 152 is disposed in such a way that the optical axis of the image-pickup unit 152 is parallel to the optical axis of the collecting unit 7 of each alpha ray observation apparatus 200.

Image synthesis unit 153 receives, as inputs, the taken image of the to-be-observed object 300 that is output from the image-pickup unit 152, and the spatial distribution of the excited light amount that is output from the excited light amount synthesis unit 151. The image synthesis unit 153 converts the spatial distribution of the excited light amount that is output from the excited light amount synthesis unit 151 into image data.

The image synthesis unit 153 superimposes the image data of the spatial distribution of the excited light amount on the image of the to-be-observed object 300 taken by the image-pickup unit 152, to output a superimposed image.

Incidentally, according to the present embodiment, the to-be-observed object 300 spreads in a one-dimensional manner. However, the present invention is not limited to this. If the to-be-observed object 300 spreads in a two-dimensional manner, the alpha ray observation apparatus 200 may be arranged in parallel in a two-dimensional manner in such a way as to be parallel.

In each alpha ray observation apparatus 200, the light collected by the collecting unit 7 focuses into an image depending on the position where the light is emitted by alpha rays, as in a single-lens reflex camera, a digital camera, or the like.

Accordingly, the photon detector set 2 is placed at the position where an image is formed. Therefore, the position of a light-emission point by alpha rays can be linked to the photon detector set 2 that detects the signal. According to this placement method, if there are a plurality of photon detector sets 2, the intensity of alpha rays can be measured in a spatially wide region.

As described above, in the alpha ray observation apparatus 200 of the present embodiment, a plurality of photon detector sets 2 are provided. And the light amount calculation unit 4 removes the background. Then, the alpha ray observation apparatus 200 can be used under sunlight or lighting equipment that slightly contains the ultraviolet region, such as fluorescent light. Thus, it is possible to take an image of the to-be-observed object 300 under visible light.

As a result, it is possible to visually recognize how the to-be-observed object 300 is being contaminated with alpha ray sources, which could not be observed through measurement of light in the ultraviolet region.

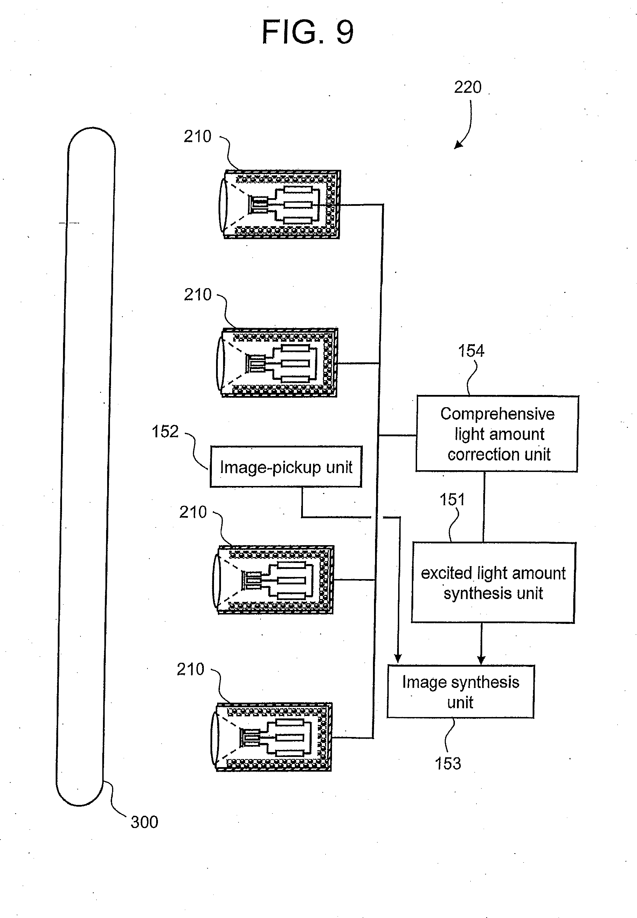

FIG. 9 is a longitudinal cross-sectional view showing the configuration of a modified example of an alpha ray observation system according to a fourth embodiment of the present invention.

What is shown here is alpha ray observation apparatus 200 each of which has the light amount calculation unit 4 and the alpha ray identifying unit 5 that are provided outside the housing 9. Portions of the alpha ray observation apparatus 200 other than the light amount calculation unit 4 and the alpha ray identifying unit 5 will be referred to as alpha ray observation units 210. The alpha ray observation units 210 are similarly disposed in parallel in such a way as to face the to-be-observed object 300 and be parallel each other.

The light amount calculation units 4 provided in the alpha ray observation apparatus 200 will be collectively referred to as a comprehensive light amount correction unit 154. The comprehensive light amount correction unit 154 is a correction unit that receives an output from the photon detector set 2 of each alpha ray observation apparatus 210 to carry out background correction calculation and conversion to the alpha ray intensity, as in the single alpha ray observation apparatus 200.

In this manner, based on an output from the comprehensive light amount correction unit 154, the excited light amount synthesis unit 151 similarly outputs the spatial distribution of excited light amount. The image synthesis unit 153 produces an image of the spatial distribution of excited light amount, and combines this image with image fed from the image-pickup unit 152.

In that manner, the alpha ray observation apparatus 210 are made lightweight, and calculation processes are carried out collectively. As a result, the system is simplified.

[FIFTH EMBODIMENT]

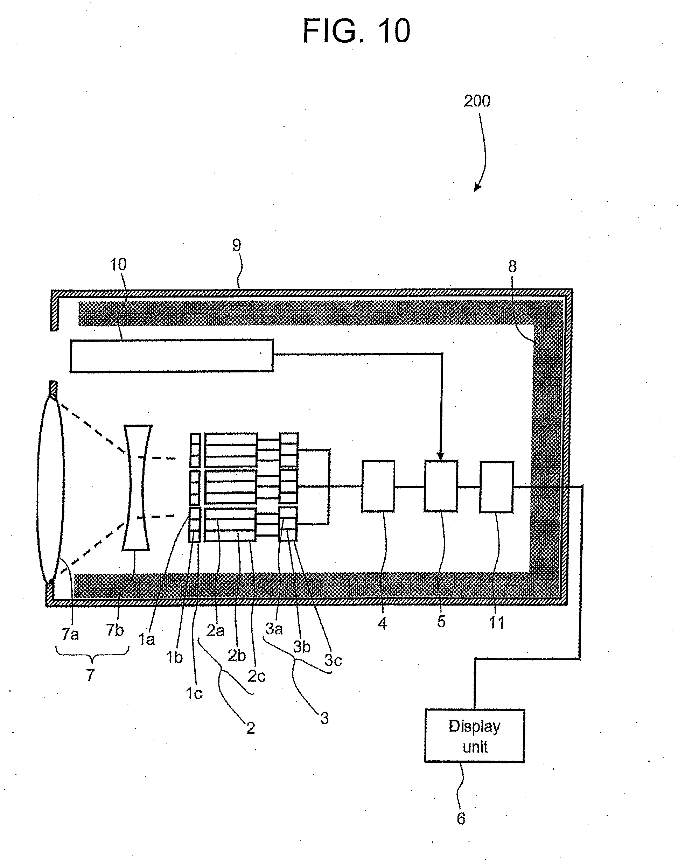

FIG. 10 is a longitudinal cross-sectional view showing the configuration of an alpha ray observation apparatus according to a fifth embodiment of the present invention.

The present embodiment is a variant of the first embodiment. An alpha ray observation apparatus 200 includes three photon detector sets 2. The alpha ray observation apparatus 200 also includes an image-pickup unit 10 and an excited light amount synthesis unit 11.

The image-pickup unit 10 is disposed in such a way that the optical axis of the collecting unit 7 is parallel to the optical axis of the image-pickup unit 10. The angle of view of the collecting unit 7 is less than or equal to the angle of view of the image-pickup unit 10. In this case, the angle of view of the collecting unit 7 is a solid angle when the side of the source of light entering the photon detector sets 2 via the collecting unit 7 is conversely viewed from the side of the collecting unit 7. The angle of view of the image-pickup unit 10 is a solid angle when a shooting range is viewed from the side of the image-pickup unit 10.

According to the above settings, even if there is a distance between the optical axis of the collecting unit 7 and the optical axis of the image-pickup unit 10, the range of the angle of view of the collecting unit 7 can be identified within an image taken by the image-pickup unit 10.

As in the case of the fourth embodiment, the excited light amount synthesis unit 11 receives, as an input, the alpha ray intensity that is output from each of the three photon detector sets 2 to calculate the spatial distribution of alpha ray intensity.

The number of photon detector sets 2 is not limited to three. There may be two photon detector sets 2, or four or more photon detector sets 2. The photon detector sets 2 may be arranged not only in a one-dimensional manner, but also in a two-dimensional manner.

According to the above-described configuration, as in the case of the fourth embodiment, it is possible to recognize how the to-be-observed object 300 (See FIG. 8) spreads in a one-dimensional manner.

[OTHER EMBODIMENTS]

The present invention is described above by way of several embodiments. However, the embodiments are presented only as examples without any intention of limiting the scope of the present invention. Moreover, features of the embodiments may be used in combination. Furthermore, the above-described embodiment may be put to use in various different ways and, if appropriate, any of the components thereof may be omitted, replaced or altered in various different ways without departing from the spirit and scope of the invention. Therefore, all the above-described embodiments and the modifications made to them are within the spirit and scope of the present invention, which is specifically defined by the appended claims, as well as their equivalents.

EXPLANATION OF REFERENCE SYMBOLS

1: wavelength selecting unit, 1a: light wavelength selecting unit, 1b: short-side wavelength selecting unit, 1c: long-side wavelength selecting unit, 2: photon detector set, 2a: alpha-ray-caused light detecting unit, 2b: short-side wavelength light detecting unit, 2c: long-side wavelength light detecting unit, 3, 3a, 3b, 3c: counters, 4: light amount calculation unit, 5: alpha ray identifying unit, 6: display unit, 7: collecting unit, 7a: convex lens, 7b: concave lens, 8: shielding member, 9: housing, 10: image-pickup unit, 11: excited light amount synthesis unit, 12: gas blowing unit, 13: spectroscopic unit, 14: ambient light identifying unit, 20: movement mechanism unit, 20a: operation unit, 21: traveling pedestal, 22: traveling unit, 23: moving housing, 101: collecting lens, 102: wavelength selection element, 103: optical element, 104: direction changing unit, 105a, 105b: light detectors, 106: signal processing apparatus, 151: excited light amount synthesis unit, 152: image-pickup unit, 153: image synthesis unit, 154: comprehensive light amount correction unit, 200, 210: alpha ray observation apparatus, 220: alpha ray observation system, 300: to-be-observed object

**Claims**

1. An alpha ray observation apparatus that observes alpha rays by detecting alpha-ray-caused light which is generated from interaction between an atmosphere substance and alpha rays generated from an alpha ray source in a to-be-observed object, the apparatus comprising:

   an alpha-ray-caused light wavelength selecting unit that can select light of a predetermined wavelength width including wavelength of the alpha-ray-caused light;
   an alpha-ray-caused light detecting unit to measure an amount XA of alpha-ray-caused light coming from the alpha-ray-caused light wavelength selecting unit;
   a short-side wavelength selecting unit that can select light of a short-side wavelength that is close to the wavelength of the alpha-ray-caused light and is shorter than the wavelength of the alpha-ray-caused light;
   a short-side wavelength light detecting unit to measure an amount BS of short-side wavelength light coming from the short-side wavelength selecting unit;
   a long-side wavelength selecting unit that can select light of a long-side wavelength that is close to the wavelength of the alpha-ray-caused light and is longer than the wavelength of the alpha-ray-caused light;
   a long-side wavelength light detecting unit to measure an amount BL of long-side wavelength light coming from the long-side wavelength selecting unit; and
   a correction unit to calculate a corrected light amount XAT by correcting the amount XA of the alpha-ray-caused light based on the amount XA of the alpha-ray-caused light, the amount BS of the short-side wavelength light, and the amount BL of the long-side wavelength light.

2. The alpha ray observation apparatus according to claim 1, further comprising
   an alpha ray identifying unit to receive the corrected light amount from the correction unit to convert the corrected light amount into an alpha ray intensity.

3. The alpha ray observation apparatus according to claim 1 or 2, wherein
   the correction unit regards the amount BS of the short-side wavelength light and the amount BL of the long-side wavelength light as background amounts of background light at each wavelength, calculates a background amount BA at the wavelength of the alpha-ray-caused light through interpolation from the amount BS of the short-side wavelength light and the amount BL of the long-side wavelength light, and calculates the corrected light amount XAT by an equation of XAT = XA-BA.

4. The alpha ray observation apparatus according to any one of claims 1 to 3, further comprising
   a collecting unit that has focal points at the alpha-ray-caused light wavelength selecting unit, the short-side wavelength light detecting unit, and the long wavelength light detecting unit.

5. The alpha ray observation apparatus according to any one of claims 1 to 4, further comprising
   a shielding member around the alpha-ray-caused light wavelength selecting unit, the short-side wavelength light detecting unit, and the long wavelength light detecting unit, the shielding member being provided to shield against alpha rays.

6. The alpha ray observation apparatus according to any one of claims 1 to 5, further comprising
   a spectroscopic unit to actually measure a spectrum of light, wherein
   functions of the alpha-ray-caused light wavelength selecting unit, short-side wavelength selecting unit, and long-side wavelength selecting unit are realized by the spectroscopic unit.

7. The alpha ray observation apparatus according to any one of claims 1 to 6, further comprising:

   a movement mechanism unit to change a distance between the alpha-ray-caused light detecting unit and the to-be-observed object, a distance between the short-side wavelength light detecting unit and the to-be-observed object, and a distance between the long-side wavelength light detecting unit and the to-be-observed object; and
   an ambient light identifying unit to identify ambient light based on a change in the distance caused by the movement mechanism unit and a resulting change in measured value of an amount of light.

8. An alpha ray observation system comprising:

   a plurality of alpha ray observation apparatuses according to any one of claims 1 to 7 that are arranged in parallel in such a way as to face a spatial distribution of the to-be-observed object;

an excited light amount synthesis unit that calculates a spatial distribution of alpha-ray-caused light based on an output from each of the alpha ray observation apparatus;

an image-pickup unit that takes an image of a visible light region of the to-be-observed object; and

an image synthesis unit that converts a spatial distribution of excited light amount into image data based on an output of the excited light amount synthesis unit and superimposes the image data on an image taken by the image-pickup unit to output a superimposed image.

9. An alpha ray observation system comprising:

an alpha ray observation apparatus according to any one of claims 1 to 7;

an excited light amount synthesis unit to calculate a spatial distribution of excited light amount based on a corrected light amount of the alpha ray observation apparatus;

an image-pickup unit to take an image of a visible light region of the to-be-observed object; and

an image synthesis unit to convert a spatial distribution of excited light amount into image data based on an output of the excited light amount synthesis unit and to superimpose the image data on an image taken by the image-pickup unit to output a superimposed image, wherein

the alpha ray observation apparatus includes a plurality of the alpha-ray-caused light wavelength selecting units, alpha-ray-caused light detecting units, short-side wavelength selecting units, short-side wavelength light detecting units, long-side wavelength selecting units, and long-side wavelength light detecting units that are arranged in parallel in such a way that each unit faces a spatial distribution of the to-be-observed object, and

the correction unit calculates a corrected light amount by correcting the amount of the alpha-ray-caused light based on an output of each of a plurality of the alpha-ray-caused light detecting units, the short-side wavelength light detecting units, and the long-side wavelength light detecting units.

10. An alpha ray observation method for observing alpha rays by detecting alpha-ray-caused light which is generated from interaction between an atmosphere substance and alpha rays generated from an alpha ray source in a to-be-observed object, the method comprising:

an alpha-ray-caused light measurement step, by an alpha ray observation apparatus, of measuring an amount of alpha-ray-caused light, an amount of short-side wavelength light that is shorter than wavelength of the alpha-ray-caused light, and an amount of long-side wavelength light that is longer than the wavelength of the alpha-ray-caused light;

a correction step of calculating, after the alpha-ray-caused light measurement step, a corrected light amount by correcting the amount of the alpha-ray-caused light based on the amount of the alpha-ray-caused light, the amount of the short-side wavelength light, and the amount of the long-side wavelength light; and

an alpha ray intensity calculation step of calculating intensity of the alpha ray based on the corrected amount of the alpha-ray-caused light.

11. The alpha ray observation method according to claim 10, further comprising
a gas blowing step of blowing, before the alpha-ray-caused light measurement step, a ultraviolet light emitting gas that is induced by alpha rays to emit ultraviolet rays, over the to-be-observed object.

# FIG. 1

# FIG. 2

# FIG. 3

```
┌─────────────────────────────────┐
│        Determination of         │
│       to-be-observed object     │────── S1
└─────────────────────────────────┘
                 │
                 ▼
┌─────────────────────────────────┐
│   Measurement of each light amount │
│        alpha ray caused light   │
│     short-side wavelength light │────── S2
│      long-side wavelength light │
└─────────────────────────────────┘
                 │
                 ▼
┌─────────────────────────────────┐
│ Correction the amount of alpha ray caused light │
│      to calculate a corrected light amount      │
│           based on each light amount            │────── S3
│             alpha ray caused light              │
│          short-side wavelength light            │
│           long-side wavelength light            │
└─────────────────────────────────┘
                 │
                 ▼
┌─────────────────────────────────┐
│   Calculation of intensity of alpha rays │
│                based on                  │────── S4
│  corrected amount of alpha ray caused light │
└─────────────────────────────────┘
```

# FIG. 4

# FIG. 5

# FIG. 6

# FIG. 7

```
┌─────────────────────────────────┐
│        Determination of         │ ⌐ S1
│       to-be-observed object     │
└─────────────────────────────────┘
                │
                ▼
┌─────────────────────────────────┐
│ Blowing an ultraviolet light emitting gas │ ⌐ S5
│      over to-be-measured object          │
└─────────────────────────────────┘
                │
                ▼
┌─────────────────────────────────┐
│   Measuring of each light amount │
│       alpha ray caused light     │ ⌐ S2
│     short-side wavelength light  │
│     long-side wavelength light   │
└─────────────────────────────────┘
                │
                ▼
┌─────────────────────────────────────┐
│ Correction the amount of alpha ray caused light │
│    to calculate a corrected light amount        │ ⌐ S3
│        based on each light amount               │
│          alpha ray caused light                 │
│        short-side wavelength light              │
│        long-side wavelength light               │
└─────────────────────────────────────┘
                │
                ▼
┌─────────────────────────────────┐
│  Calculation of intensity of alpha rays │
│               based on                   │ ⌐ S4
│  corrected amount of alpha ray caused light │
└─────────────────────────────────┘
```

# FIG. 8

excited light amount synthesis unit

Image-pickup unit

Image synthesis unit

# FIG. 9

220

210

210

152

Image-pickup unit

210

210

300

154

Comprehensive
light amount
correction unit

151

excited light amount
synthesis unit

Image synthesis
unit

153

# FIG. 10

200

9

10

8

7a 7b 1a
7
1b
1c
2
2a
2b
2c
3a
3b
3c
3
4
5
11

Display
unit

6

# FIG. 11

## INTERNATIONAL SEARCH REPORT

| | International application No. |
|---|---|
| | PCT/JP2014/000720 |

A.   CLASSIFICATION OF SUBJECT MATTER
*G01T1/205*(2006.01)i, *G01T1/17*(2006.01)i, *G01T1/20*(2006.01)i

According to International Patent Classification (IPC) or to both national classification and IPC

B.   FIELDS SEARCHED

Minimum documentation searched (classification system followed by classification symbols)
G01T1/205, G01T1/17, G01T1/20

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | JP 2000-507698 A  (Commissariat A L'energie Atomique, Algade), 20 June 2000 (20.06.2000), entire text; all drawings & US 6281502 B1        & EP 890116 A & WO 1997/037244 A1      & DE 69717797 D & DE 69717797 T          & FR 2746927 A & FR 2746927 A1          & CA 2250358 A & RU 2188437 C | 1-11 |
| A | US 5493121 A  (Brian J. Fitzpatrick), 20 February 1996 (20.02.1996), entire text; all drawings (Family: none) | 1-11 |

| ☐   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 April, 2014 (01.04.14) | 08 April, 2014 (08.04.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000507698 A

**Non-patent literature cited in the description**

- Remote Optical Detection of Alpha Radiation. *IAEA-CN-184/23*